# EUROPÄISCHE PATENTSCHRIFT

(11) **EP 3 493 005 B1**
(45) Veröffentlichungstag und Bekanntmachung des Hinweises auf die Patenterteilung: **07.04.2021**
(21) Anmeldenummer: 18203987.5
(22) Anmeldetag: 01.11.2018
(51) Int. Cl.: G05B 19/4065, B23Q 17/09, B23Q 17/10

(54) **VERFAHREN ZUM ERFASSEN MINDESTENS EINES WERKZEUGZUSTANDS EINES WERKZEUGS EINER WERKZEUGMASCHINE ZUR BEARBEITUNG VON WERKSTÜCKEN SOWIE WERKZEUGMASCHINE**
METHOD FOR DETECTING AT LEAST ONE TOOL CONDITION OF A TOOL OF A TOOLING MACHINE FOR MACHINING WORKPIECES AND TOOLING MACHINE
PROCÉDÉ DE DÉTECTION D'AU MOINS UN ÉTAT D'OUTIL D'UN OUTIL DE MACHINE À OUTILLER DESTINÉ À USINER DES PIÈCES ET DES MACHINES À OUTILLER

(30) Priorität: 01.12.2017 DE 102017128628
(43) Veröffentlichungstag der Anmeldung: 05.06.2019
(73) Patentinhaber: Point 8 GmbH, 44139 Dortmund (DE)
(72) Erfinder: Brambach, Tobias, 44319 Dortmund (DE); Cauet, Christophe, 76829 Landau in der Pfalz (DE); Kruse, Florian, 44141 Dortmund (DE); Heinz, Jochen, 78628 Rottweil (DE)
(74) Vertreter: Schorr, Peter Karl

(56) Entgegenhaltungen:
- EP-A1- 1 449 615
- EP-A1- 1 679 566
- DE-A1- 10 029 965
- DE-A1-102013 103 779
- DE-B3-102009 025 167
- JP-A- 2011 121 139

## Beschreibung

Die Erfindung betrifft ein Verfahren zum Erfassen mindestens eines Referenz-Werkzeugzustands eines Werkzeugs einer Werkzeugmaschine zur Bearbeitung von Werkstücken sowie eine Werkzeugmaschine, die durch ein derartiges Verfahren betreibbar ist.

Verfahren zum Erfassen von Bearbeitungsvorgängen in und bei Werkzeugmaschinen sind bekannt. Hierbei werden beispielsweise erfasste und/oder gemessene IST-Werte von Komponenten der Werkzeugmaschine erfasst und mit SOLL-Werten oder mit in vorhergehenden Arbeitszyklen erfassten und rechnerisch gemittelten IST-Werten verglichen, um einen ordnungsgemäßen Betrieb der Werkzeugmaschine oder um eine Abweichung von einem ordnungsgemäßen Betrieb der Werkzeugmaschine festzustellen. Ein derartiges Verfahren ist beispielsweise bekannt aus EP 2 793 088 A1, EP 1 679 566 A1 sowie DE 10 2009 025 167 B3.

Bei den bekannten Verfahren hat es sich als nachteilig herausgestellt, dass zum Erfassen eines IST-Zustands einer Komponente der Werkzeugmaschine Sensormittel vorgesehen sein müssen, durch die die jeweilige Komponente überwachbar ist. Dieses erweist sich in vielen Fällen als aufwendig und kostenintensiv, insbesondere, wenn der in der Werkzeugmaschine vorhandene Bauraum den Einbau von Sensormitteln erschwert.

Eine Aufgabe eines Ausführungsbeispiels der Erfindung ist, ein Verfahren zum Erfassen mindestens eines Werkzeugzustands eines Werkzeugs einer Werkzeugmaschine zur Bearbeitung von Werkstücken vorzuschlagen, das einfach und kostengünstig durchführbar ist.

Diese Aufgabe wird gelöst durch ein Verfahren zum Erfassen mindestens eines Werkzeugzustands eines Werkzeugs einer Werkzeugmaschine zur Bearbeitung von Werkstücken, die mindestens eine Werkzeugaufnahme, die mindestens einen die Werkzeugaufnahme antreibbaren elektrischen Drehantrieb, die mindestens einen elektrischen Positionierungsantrieb, durch den ein Abstand und/oder ein Winkel zumindest zwischen Werkstück und Werkzeugaufnahme einstellbar ist, die mindestens ein Werkzeug umfasst, das in der Werkzeugaufnahme drehfest angeordnet ist und die mindestens eine ein Speichermittel umfassende Steuereinheit umfasst, mit den Schritten
a. Erfassen oder Bereitstellen von Werkzeug- und Werkstückdaten in dem Speichermittel der Steuereinheit;
b. Bereitstellen mindestens einer Referenz-Antriebsfrequenz des Drehantriebs und des Positionierantriebs, der ein Referenz-Werkzeugzustand des Werkzeugs zumindest in Abhängigkeit der Werkzeug- und Werkstückdaten zugeordnet ist, durch datensatzartiges Hinterlegen der Referenz-Antriebsfrequenz des Drehantriebs und des Positionierantriebs in dem Speichermittel der Steuereinheit;
c. Erfassen mindestens einer IST-Antriebsfrequenz des Drehantriebs und des Positionierantriebs;
d. Zuordnen der IST-Antriebsfrequenz des Drehantriebs und des Positionierantriebs einer Referenz-Antriebsfrequenz des Drehantriebs und des Positionierantriebs durch die Steuereinheit sowie Zuordnen des Referenz-Werkzeugzustands des Werkzeugs durch Auswerten und/oder Interpretieren zumindest der der IST-Antriebsfrequenz des Drehantriebs und des Positionierantriebs zugeordneten Referenz-Antriebsfrequenz des Drehantriebs und des Positionierantriebs durch die Steuereinheit;
e. Erzeugen eines Anzeige-Signals durch das der Referenz-Werkzeugzustand angezeigt wird und Erzeugen eines Melde-Signals, wenn die der IST-Antriebsfrequenz des Drehantriebs und des Positionierantriebs zugeordnete Referenz-Antriebsfrequenz des Drehantriebs und des Positionierantriebs ein Melde-Kriterium erreicht oder überschreitet.

Durch das Erfassen der mindestens einen IST-Antriebsfrequenz des Drehantriebs und des Positionierantriebs sowie durch das Zuordnen der IST-Antriebsfrequenz einer Referenz-Antriebsfrequenz, lässt sich der Werkzeugzustand des Werkzeugs auf einfache Weise feststellen. Hierbei kann auf zusätzliche Sensormittel verzichtet werden.

Durch das Bereitstellen von mindestens einer Referenz-Antriebsfrequenz des Drehantriebs und des Positionierantriebs ist das Verfahren für eine Vielzahl von Bearbeitungsvorgängen verwendbar. Im Unterschied zu den aus dem Stand der Technik bekannten Verfahren muss hierbei beispielsweise nicht mehr jeder Bearbeitung von Werkstücken eine IST-Frequenz einer SOLLFrequenz zugeordnet werden, wodurch die Anzahl der in der Steuereinheit zu hinterlegenden möglichen Bearbeitungsvorgänge reduzierbar ist.

Darüber hinaus ist hierdurch ein Kalibrieren und Messen des Werkzeugs im laufenden Prozess möglich. Durch das Zuordnen der IST-Antriebsfrequenz des Drehantriebs und des Positionierantriebs zur Referenz-Antriebsfrequenz des Drehantriebs und des Positionierantriebs lassen sich durch das erfindungsgemäße Verfahren die Werkzeugzustände der Werkzeuge ermitteln.

Dadurch, dass das Bereitstellen der Referenz-Antriebsfrequenz des Drehantriebs und des Positionierantriebs ein datensatzartiges Hinterlegen umfasst, kann ohne Rechenaufwand ein einfacher Abgleich der IST-Antriebsfrequenz des Drehantriebs und des Positionierantriebs mit der Referenz-Antriebsfrequenz des Drehantriebs und des Positionierantriebs erfolgen.

Unter einem Erfassen des Werkzeugzustands wird nachfolgend auch ein Bewerten und Prognostizieren des Werkzeugzustands verstanden.

Der mindestens eine Positionierantrieb kann der Werkzeugaufnahme und/oder einer Werkstückaufnahme zugeordnet sein. Solchenfalls kann die Werkzeugaufnahme bezüglich eines ortsfesten Werkstücks oder das Werkstück bezüglich einer ortsfesten Werkzeugaufnahme oder Werkzeugaufnahme und Werkstück relativ zum Raum bewegt werden. Mit anderen Worten kann das Werkstück zum Werkzeug, das Werkzeug zum Werkstück oder beider aufeinander zu oder voneinander weg bewegt werden.

Die Referenz-Antriebsfrequenz des Drehantriebs und des Positionierantriebs lässt sich im Speichermittel der Steuereinheit hinterlegen oder bereitstellen.

Das Erfassen der mindestens einen Antriebsfrequenz des Drehantriebs und des Positionierantriebs kann in einer Anfahrphase, in der das Werkzeug durch den Drehantrieb und/oder Positionierantrieb in Richtung Werkstück bewegt wird, in einer Ausfahrphase, in der das Werkzeug vom Werkstück entfernt wird und/oder in einer Arbeitsphase, in der das Werkzeug das Werkstück, insbesondere spanend, bearbeitet, also beim Bearbeiten des Werkstücks, erfolgen.

Durch das Erzeugen eines Anzeige-Signals ist der Werkzeugzustand erfassbar. Hierdurch kann dem Bedienpersonal, das die Werkzeugmaschine überwacht, jederzeit eine Information über den Zustand des Werkzeugs zur Verfügung gestellt werden.

Durch das Erzeugen eines Melde-Signals, wenn die der IST-Antriebsfrequenz des Drehantriebs und des Positionierantriebs zugeordnete Referenz-Antriebsfrequenz des Drehantriebs und des Positionierantriebs ein Melde-Kriterium erreicht oder überschreitet, ist das Erfassen von meldebedürftigen Ereignissen, wie beispielsweise Werkzeugbruch oder dergleichen, erfassbar.

Die einzelnen Verfahrensschritte können in periodischen Zeitabständen durchgeführt werden, beispielsweise in Zeitabständen von 60 Sekunden und weniger, insbesondere von 45 Sekunden und weniger, insbesondere von 30 Sekunden und weniger, weiter insbesondere von weniger als 15 Sekunden und weniger sowie insbesondere weniger als 5 Sekunden und weniger. Hierdurch lässt sich die durch die Steuereinheit zu bearbeitende Datenmenge reduzieren.

Darüber hinaus ist bei einer Ausführungsform des Verfahrens vorgesehen, dass sämtliche Verfahrensschritte durchgängig erfolgen und insbesondere das Erfassen einer IST-Antriebsfrequenz des Drehantriebs und des Positionierantriebs permanent erfolgt. Dementsprechend erfolgen auch die weiteren Verfahrensschritte permanent und durchgängig.

Darüber hinaus erweist es sich als vorteilhaft, wenn das Verfahren nachfolgenden weiteren Schritt umfasst:
Anzeigen des Anzeige-Signals und Melde-Signals durch ein externes Anzeigemittel, welches von der Werkzeugmaschine unabhängig ist.

Dadurch, dass das Anzeige-Signal und das Melde-Signal an einem Anzeigemittel an der Werkzeugmaschine und/oder an einem externen Anzeigemittel anzeigbar und zuvor an dieses weiterleitbar ist, kann Bedienpersonal an der Maschine oder Kontrollpersonal in einem Kontrollraum auf den Werkzeugzustand der Werkzeugmaschine aufmerksam gemacht werden. Insbesondere, wenn das Anzeige-Signal und das Melde-Signal an ein externes Anzeigemittel weitergeleitet wird, also an ein Anzeigemittel, welches von der Werkzeugmaschine unabhängig und von diesem räumlich entfernt ist, können beispielsweise mehrere Werkzeugmaschinen durch ein und dieselbe Bedienperson überwacht werden. Hierbei kann die Anzeige des Anzeige-Signals und des Melde-Signals automatisch erfolgen oder durch Abfrage der Bedienperson.

Das Anzeige-Signal oder das Melde-Signal kann grundsätzlich das Anzeigen einer beliebigen Information umfassen. Es erweist sich als vorteilhaft, wenn der durch das Anzeige-Signal anzeigbare Referenz-Werkzeugzustand zumindest eine Information über die Restlebensdauer des Werkzeugs und/oder über den Verschleiß des Werkzeugs umfasst und/oder wenn der durch das Melde-Signal anzeigbare Referenz-Werkzeugzustand einen Ausbruch des Werkzeugs, einen Bruch des Werkzeugs und/oder eine Überlastung des Werkzeugs umfasst.

Darüber hinaus erweist es sich als vorteilhaft, wenn die IST-Antriebsfrequenz des Drehantriebs und/oder des Positionierantriebs und/oder die Referenz-Antriebsfrequenz des Drehantriebs und/oder des Positionierantriebs die elektrische Stromstärke und/oder die elektrische Leistung des Drehantriebs unddes Positionierantriebs umfasst.

Solchenfalls umfassen IST-Antriebsfrequenz des Drehantriebs und/oder des Positionierantriebs und Referenz-Antriebsfrequenz des Drehantriebs und/oder des Positionierantriebs physikalische Größen des Drehantriebs und/oder des Positionierantriebs, die einfach erfassbar sind und für deren Erfassung insbesondere keine zusätzlichen Sensormittel notwendig sind.

Die IST-Antriebsfrequenz des Drehantriebs und des Positionierantriebs, insbesondere die elektrische Stromstärke und/oder die elektrische Leistung, umfassen Eingangsgrößen zur Ermittlung des Referenz-Werkzeugzustands.

Es erweist sich als vorteilhaft, wenn das Verfahren folgenden Schritt umfasst:
Filtern der erfassten IST-Antriebsfrequenz des Drehantriebs und des Positionierantriebs und/oder Speichern der erfassten IST-Antriebsfrequenz des Drehantriebs und des Positionierantriebs in dem Speichermittel.

Durch das Filtern der erfassten IST-Antriebsfrequenz des Drehantriebs und des Positionierantriebs, lassen sich Messfehler herausfiltern. Durch das Speichern der erfassten IST-Antriebsfrequenz des Drehantriebs und des Positionierantriebs in dem Speichermittel, lassen sich Daten für eine spätere Auswertung, insbesondere Validierung zur Verfügung stellen.

Das Speichermittel kann beispielsweise ein internes Speichermittel umfassen, das der Werkzeugmaschine unmittelbar zugeordnet ist. Darüber hinaus kann das Speichermittel ein externes Speichermittel umfassen, das von der Werkzeugmaschine separiert und räumlich beabstandet ist.

Bei einer Ausführungsform des Verfahrens ist vorgesehen, dass das Speichermittel der Steuereinheit eine verteilte Rechnerstruktur umfasst.

Hierdurch ist auf einfache Weise auf verfügbare Rechnerkapazitäten zugreifbar, wodurch beim Ausführen des Verfahrens auch große Datenmengen flexibel handhabbar be- und verarbeitet werden können.

Es erweist sich als vorteilhaft, wenn das Bereitstellen der Referenz-Antriebsfrequenz des Drehantriebs und des Positionierantriebs ein Hinterlegen mindestens eines Algorithmus zur Berechnung der Referenz-Antriebsfrequenz des Drehantriebs und des Positionierantriebs sowie ein Berechnen der Referenz-Antriebsfrequenz des Drehantriebs und des Positionierantriebs umfasst.

Wenn das Bereitstellen der Referenz-Antriebsfrequenz des Drehantriebs und des Positionierantriebs ein Hinterlegen mindestens eines Algorithmus zur Berechnung der Referenz-Antriebsfrequenz des Drehantriebs und des Positionierantriebs umfasst, ist das Verfahren vielseitig und flexibel anwendbar, ohne datensatzartige Hinterlegungen, insbesondere Datenbanken, vorhalten zu müssen.

Solchenfalls ist das Verfahren auch auf unterschiedliche Werkzeugmaschinen anwendbar.

Darüber hinaus erweist es sich als vorteilhaft, wenn das Bearbeiten des Werkstücks eine An- und Ausfahrphase sowie eine Arbeitsphase des Werkzeugs umfasst und wenn der An- und Ausfahrphase sowie der Arbeitsphase jeweils eine Referenz-Antriebsfrequenz des Drehantriebs und des Positionierantriebs zuordenbar oder zugeordnet ist.

Hierdurch lässt sich der Werkzeugzustand des Werkzeugs bereits erfassen, bevor eine Bearbeitung des Werkstückes erfolgt. Wenn beispielsweise im Zuge der Anfahrphase ein Werkzeugzustand erfasst wird, durch den eine Bearbeitung des Werkstücks nicht oder nur durch hohe Qualitätseinbußen möglich ist, erfasst wird, kann das Werkzeug gewechselt werden, bevor Ausschuss entsteht.

Zum Validieren der bereitgestellten Referenz-Antriebsfrequenz des Drehantriebs und des Positionierantriebs erweist es sich als vorteilhaft, wenn das Verfahren nachfolgende Schritte umfasst:
Messen und/oder Analysieren des Werkzeugs mit einem Prüfmittel zum Ermitteln des IST-Werkzeugzustands des Werkzeugs und Validieren und/oder Anpassen des Referenz-Werkzeugzustands durch Zuordnen der IST-Antriebsfrequenz des Drehantriebs und des Positionierantriebs beim erfassten IST-Werkzeugzustand als neue Referenz-Antriebsfrequenz des Drehantriebs und des Positionierantriebs.

Solchenfalls sind die hinterlegten Referenz-Antriebsfrequenzen des Drehantriebs und des Positionierantriebs und/oder der hinterlegte Algorithmus anpassbar, validierbar und verfeinerbar. Hierdurch lässt sich ein Unterschied des Referenz-Werkzeugzustands zu einem realen Werkzeugzustand weiter reduzieren und eine Vorhersagegenauigkeit kontinuierlich verbessern.

Schließlich wird die Aufgabe gelöst durch eine Werkzeugmaschine, die Mittel umfasst, das Verfahren mit einem der zuvor genannten Merkmale zu betreiben, mit mindestens einem die Werkzeugaufnahme antreibbaren elektrischen Drehantrieb, mit mindestens einem elektrischen Positionierungsantrieb, durch den ein Abstand zumindest zwischen Werkstück und Werkzeugaufnahme einstellbar ist, mit mindestens einem Werkzeug, das in der Werkzeugaufnahme drehfest angeordnet ist und mit mindestens einer ein Speichermittel umfassenden Steuereinheit.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Verfahren zum Erfassen mindestens eines Werkzeugzustands eines Werkzeugs einer Werkzeugmaschine zur Bearbeitung von Werkstücken sowie der Werkzeugmaschine.

In der Zeichnung zeigt:
- Figur 1: Eine Seitenansicht auf eine schematisch dargestellte Werkzeugmaschine;
- Figur 2: Ein Ablaufdiagramm eines Ausführungsbeispiels eines erfindungsgemäßen Verfahrens.

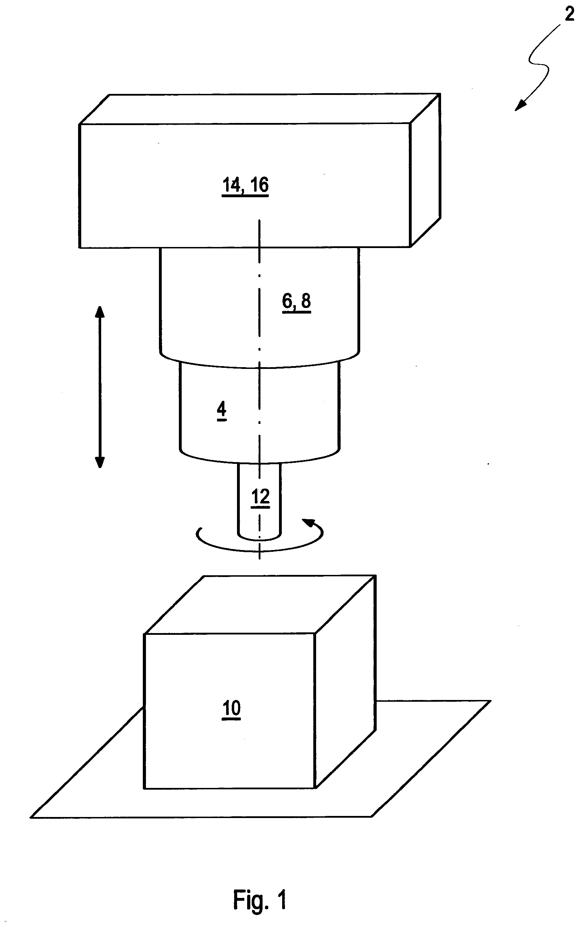

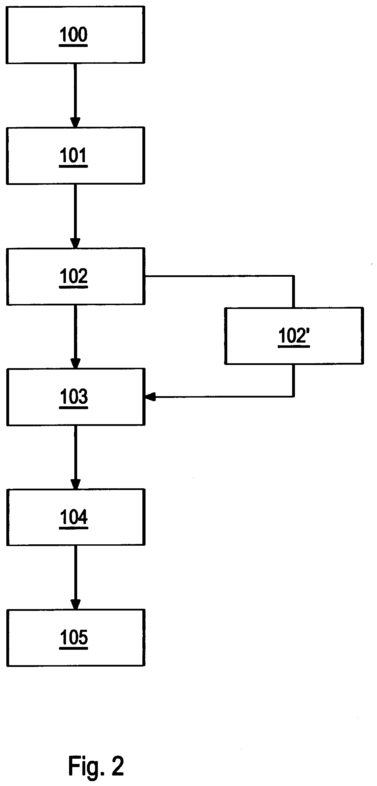

Figur 1 zeigt eine insgesamt mit dem Bezugszeichen 2 versehene Werkzeugmaschine 2, die nach einem Verfahren gemäß Figur 2 betreibbar ist. Die Werkzeugmaschine 2 umfasst eine Werkzeugaufnahme 4 sowie einen die Werkzeugaufnahme 4 antreibbaren, insbesondere elektrischen, Drehantrieb 6.

Darüber hinaus umfasst die Werkzeugmaschine 2 einen, insbesondere elektrischen, Positionierungsantrieb 8, durch den ein Abstand zwischen einem Werkstück 10 und der Werkzeugaufnahme 4 einstellbar ist. In der Werkzeugaufnahme 4 ist ein Werkzeug 12 anordenbar, das in der Werkzeugaufnahme 4 drehfest angeordnet ist. Darüber hinaus umfasst die in Figur 1 dargestellte Werkzeugmaschine 2 eine ein Speichermittel 14 umfassende Steuereinheit 16.

Anhand von Figur 2, unter Zuhilfenahme und Verweis auf die in Figur 1 schematisch dargestellten einzelnen Komponenten der Werkzeugmaschine 2, wird das erfindungsgemäße Verfahren beschrieben:
In einem ersten Verfahrensschritt 100 werden Werkzeug- und Werkstückdaten, wie Abmessungen und Material, in dem Speichermittel 14 und/oder der Steuereinheit 16 erfasst oder bereitgestellt. In einem nachfolgenden Schritt 101 wird mindestens eine Referenz-Antriebsfrequenz des Drehantriebs 6 und des Positionierantriebs 8 zumindest in Abhängigkeit der Werkzeug- und Werkstückdaten, wie Abmessungen und Material, zugeordnet und bereitgestellt. Dieses erfolgt durch datensatzartiges Hinterlegen der Referenz-Antriebsfrequenz des Drehantriebs 6 und des Positionierantriebs 8 in dem Speichermittel 14 der Steuereinheit (16).

In einem nachfolgenden Schritt 102 wird mindestens eine IST-Antriebsfrequenz des Drehantriebs 6 und des Positionierantriebs 8 erfasst.

Die IST-Antriebsfrequenz des Drehantriebs 6 und des Positionierantriebs 8 und die Referenz-Antriebsfrequenz des Drehantriebs 6 und des Positionierantriebs 8 können beispielsweise die elektrische Stromstärke und/oder die elektrische Leistung des Drehantriebs 6 und des Positionierantriebs 8 umfassen.

In einem darauffolgenden Schritt 103 wird die erfasste IST-Antriebsfrequenz des Drehantriebs 6 und des Positionierantriebs 8 einer Referenz-Antriebsfrequenz des Drehantriebs 6 und des Positionierantriebs 8 durch die Steuereinheit 16 zugeordnet sowie ausgewertet und interpretiert. Hierbei kann die Auswertung und Interpretation beispielsweise das Feststellen eines Referenz-Werkzeugzustands umfassen, der Informationen über die Restlebensdauer des Werkzeugs 12, über den Verschleiß des Werkzeugs 12 oder einen Ausbruch des Werkzeug 12, einen Bruch des Werkzeugs 12 und/oder eine Überlastung des Werkzeugs 12 umfasst.

In einem hieran anschließenden weiteren Schritt 104 wird ein Anzeigesignal erzeugt, durch das der Referenz-Werkzeugzustand anzeigbar ist. Ferner wird ein Meldesignal erzeugt, wenn die der IST-Antriebsfrequenz des Drehantriebs 6 und des Positionierantriebs 8 zugeordnete Referenz-Antriebsfrequenz des Drehantriebs 6 und des Positionierantriebs 8 ein Melde-Kriterium erreicht oder überschreitet.

Hierbei kann das Melde-Kriterium derart gewählt sein, dass der Referenz-Werkzeugzustand einen Werkzeugausbruch, einen Werkzeugbruch und/oder eine Werkzeugüberlastung umfasst.

Darüber werden in einem weiteren Schritt 105 die erzeugten Anzeige-Signale und/oder Melde-Signale an einem Anzeigemittel angezeigt. Hierbei kann das Anzeigemittel unmittelbar der Werkzeugmaschine 2 zugeordnet sein oder ein externes Anzeigemittel umfassen, welches von der Werkzeugmaschine unabhängig räumlich beabstandet ist.

Um die Qualität des Verfahrens weiter zu erhöhen, kann ein Zwischenschritt 102' vorgesehen sein, bei dem die erfassten IST-Antriebsfrequenzen des Drehantriebs 6 und des Positionierantriebs 8 gefiltert werden. Diese können im Schritt 102' auch in dem Speichermittel 14 gespeichert werden. Verfahrensschritt 101 wird dadurch realisiert, dass datensatzartig Referenz-Antriebsfrequenzen des Drehantriebs 6 und des Positionierantriebs 8 in dem Speichermittel 14 der Steuereinheit 16 hinterlegt werden. Ferner kann alternativ oder in Ergänzung hierzu ein Algorithmus zur Berechnung der Referenz-Antriebsfrequenz des Drehantriebs 6 und/oder des Positionierantriebs 8 hinterlegt werden und durch diesen die Referenz-Antriebsfrequenz berechnet werden.

Die in der vorstehenden Beschreibung, in den Ansprüchen sowie in der Zeichnung offenbarten Merkmale der Erfindung, können sowohl einzeln, als auch in jeder beliebigen Kombination bei der Verwirklichung der Erfindung in ihren verschiedenen Ausführungsformen vorteilhaft sein.

### Bezugszeichenliste

- 2: Werkzeugmaschine
- 4: Werkzeugaufnahme
- 6: Drehantrieb
- 8: Positionierungsantrieb
- 10: Werkstück
- 12: Werkzeug
- 14: Speichermittel
- 16: Steuereinheit

- 100-105: Verfahrensschritte

## Patentansprüche

1. Verfahren zum Erfassen mindestens eines Werkzeugzustands eines Werkzeugs (12) einer Werkzeugmaschine (2) zur Bearbeitung von Werkstücken (10), die mindestens eine Werkzeugaufnahme (4), die mindestens einen die Werkzeugaufnahme (4) antreibbaren elektrischen Drehantrieb (6), die mindestens einen elektrischen Positionierungsantrieb (8), durch den ein Abstand und/oder ein Winkel zumindest zwischen Werkstück (10) und Werkzeugaufnahme (4) einstellbar ist, die mindestens ein Werkzeug (12) umfasst, das in der Werkzeugaufnahme (4) drehfest angeordnet ist und die mindestens eine ein Speichermittel (14) umfassende Steuereinheit (16) umfasst, mit den Schritten
a. Erfassen oder Bereitstellen von Werkzeug- und Werkstückdaten in dem Speichermittel (14) der Steuereinheit (16);
b. Bereitstellen mindestens einer Referenz-Antriebsfrequenz des Drehantriebs (6) und des Positionierantriebs (8), der ein Referenz-Werkzeugzustand des Werkzeugs (12) zumindest in Abhängigkeit der Werkzeug- und Werkstückdaten zugeordnet ist, durch datensatzartiges Hinterlegen der Referenz-Antriebsfrequenz des Drehantriebs (6) und des Positionierantriebs (8) in dem Speichermittel (14) der Steuereinheit (16);
c. Erfassen mindestens einer IST-Antriebsfrequenz des Drehantriebs (6) und des Positionierantriebs (8);
d. Zuordnen der IST-Antriebsfrequenz des Drehantriebs (6) und des Positionierantriebs (8) einer Referenz-Antriebsfrequenz des Drehantriebs (6) und des Positionierantriebs (8) durch die Steuereinheit (16) sowie Zuordnen des Referenz-Werkzeugzustands des Werkzeugs (12) durch Auswerten und/oder Interpretieren zumindest der der IST-Antriebsfrequenz des Drehantriebs (6) und des Positionierantriebs (8) zugeordneten Referenz-Antriebsfrequenz des Drehantriebs (6) und des Positionierantriebs (8) durch die Steuereinheit (16);
e. Erzeugen eines Anzeige-Signals durch das der Referenz-Werkzeugzustand angezeigt wird und Erzeugen eines Melde-Signals, wenn die der IST-Antriebsfrequenz des Drehantriebs (6) und des Positionierantriebs (8) zugeordnete Referenz-Antriebsfrequenz des Drehantriebs (6) und des Positionierantriebs (8) ein Melde-Kriterium erreicht oder überschreitet.

2. Verfahren nach Anspruch 1, **gekennzeichnet durch** Anzeigen des Anzeige-Signals und/oder Melde-Signals an einem Anzeigemittel der Werkzeugmaschine (2), welches mittelbar oder unmittelbar an der Werkzeugmaschine (2) angeordnet ist und/oder welches der Werkzeugmaschine (2) funktional zugeordnet ist und/oder Weiterleiten und Anzeigen des Anzeige-Signals und/oder Melde-Signals an ein externes Anzeigemittel, welches von der Werkzeugmaschine (2) unabhängig ist.

3. Verfahren nach Anspruch 1 oder 2, **dadurch gekennzeichnet, dass** der durch das Anzeige-Signal anzeigbare Referenz-Werkzeugzustand zumindest eine Information über die Restlebensdauer des Werkzeugs (12) und/oder über den Verschleiß des Werkzeugs (12) umfasst und/oder dass der durch das Melde-Signal anzeigbare Referenz-Werkzeugzustand einen Ausbruch des Werkzeugs (12), einen Bruch des Werkzeugs (12) und/oder eine Überlastung des Werkzeugs (12) umfasst.

4. Verfahren nach mindestens einem der vorhergehenden Ansprüche, **dadurch gekennzeichnet, dass** die IST-Antriebsfrequenz des Drehantriebs (6) und des Positionierantriebs (8) und/oder die Referenz-Antriebsfrequenz des Drehantriebs (6) und des Positionierantriebs (8) die elektrische Stromstärke und/oder die elektrische Leistung des Drehantriebs (6) und des Positionierantriebs (8) umfasst.

5. Verfahren nach mindestens einem der vorhergehenden Ansprüche, **gekennzeichnet durch** Filtern der erfassten IST-Antriebsfrequenz des Drehantriebs (6) und des Positionierantriebs (8) und/oder Speichern der erfassten IST-Antriebsfrequenz des Drehantriebs (6) und des Positionierantriebs (8) in dem Speichermittel (14).

6. Verfahren nach mindestens einem der vorhergehenden Ansprüche, **dadurch gekennzeichnet, dass** das Speichermittel (14) der Steuereinheit (16) eine verteilte Rechnerstruktur umfasst.

7. Verfahren nach mindestens einem der vorhergehenden Ansprüche, **dadurch gekennzeichnet, dass** das Bereitstellen der Referenz-Antriebsfrequenz des Drehantriebs (6) und des Positionierantriebs (8) ein ein Hinterlegen mindestens eines Algorithmus' zur Berechnung der Referenz-Antriebsfrequenz des Drehantriebs (6) und des Positionierantriebs (8) sowie ein Berechnen der Referenz-Antriebsfrequenz des Drehantriebs (6) und des Positionierantriebs (8) umfasst.

8. Verfahren nach mindestens einem der vorhergehenden Ansprüche, **dadurch gekennzeichnet, dass** das Bearbeiten des Werkstücks (12) eine An- und Ausfahrphase sowie eine Arbeitsphase des Werkzeugs (12) umfasst und dass der An- und Ausfahrphase sowie der Arbeitsphase jeweils eine Referenz-Antriebsfrequenz des Drehantriebs (6) und des Positionierantriebs (8) zuordenbar oder zugeordnet ist.

9. Verfahren nach mindestens einem der vorhergehenden Ansprüche, **gekennzeichnet durch** Messen und/oder Analysieren des Werkzeugs (12) mit einem Prüfmittel zum Ermitteln des IST-Werkzeugzustands des Werkzeugs (12) und Validieren und/oder Anpassen des Referenz-Werkzeugzustand durch Zuordnen der IST-Antriebsfrequenz des Drehantriebs (6) und des Positionierantriebs (8) beim erfassten IST-Werkzeugzustand als neue Referenz-Antriebsfrequenz des Drehantriebs (6) und des Positionierantriebs (8).

10. Werkzeugmaschine (2), die Mittel umfasst, das Verfahren nach einem der Ansprüche 1 bis 9 zu betreiben, mit mindestens einer Werkzeugaufnahme (4), mit mindestens einem die Werkzeugaufnahme (4) antreibbaren elektrischen Drehantrieb (6), mit mindestens einem elektrischen Positionierungsantrieb (8), durch den ein Abstand und/oder ein Winkel zumindest zwischen Werkstück (10) und Werkzeugaufnahme (4) einstellbar ist, mit mindestens einem Werkzeug (12), das in der Werkzeugaufnahme (4) drehfest angeordnet ist und mit mindestens einer ein Speichermittel (14) umfassenden Steuereinheit (16).

## Claims

1. Method for detecting at least one tool state of a tool (12) of a machine tool (2) for machining workpieces (10), which comprises at least one tool mount driven by an electric rotary drive (6) which can drive the tool mount (4), which comprises at least one electric positioning drive (8), by means of which a distance and/or an angle can be set at least between the workpiece (10) and the tool mount (4), which comprises at least one tool (12) which is arranged in a rotationally fixed manner in the tool mount (4), and which comprises at least one control unit (16) comprising a storage means (14), having the steps of
a. acquisition or providing tool and workpiece data in the storage means (14) of the control unit (16);
b. providing at least one reference drive frequency of the rotary drive (6) and of the positioning drive (8), to which a reference tool state of the tool (12) is assigned at least as a function of the tool and workpiece data, by storing the reference drive frequency of the rotary drive (6) and of the positioning drive (8) in the form of a data record in the storage means (14) of the control unit (16);
c. detection of at least one actual drive frequency of the rotary drive (6) and the positioning drive (8);
d. assigning the actual drive frequency of the rotary drive (6) and of the positioning drive (8) to a reference drive frequency of the rotary drive (6) and of the positioning drive (8) by the control unit (16), and assigning the reference tool state of the tool (12) by evaluating and/or interpreting at least the reference drive frequency of the rotary drive (6) and of the positioning drive (8) assigned to the actual drive frequency of the rotary drive (6) and of the positioning drive (8) by the control unit (16);
e. generating an indication signal by which the reference tool state is indicated and generating a message signal when the reference drive frequency of the rotary drive (6) and the positioning drive (8) associated with the actual drive frequency of the rotary drive (6) and the positioning drive (8) reaches or exceeds a reporting criterion.

2. Method according to claim 1, **characterized by** displaying the indication signal and/or message signal on a display means of the machine tool (2), which is arranged indirectly or directly on the machine tool (2) and/or which is functionally assigned to the machine tool (2) and/or forwarding and displaying the indication signal and/or message signal to an external display means, which is independent of the machine tool (2).

3. Method according to claim 1 or 2, **characterized in that** the reference tool state which can be indicated by the indication signal comprises at least information about the remaining service life of the tool (12) and/or about the wear of the tool (12) and/or **in that** the reference tool state which can be indicated by the message signal comprises a breakout of the tool (12), a breakage of the tool (12) and/or an overload of the tool (12).

4. Method according to at least one of the preceding claims, **characterized in that** the actual drive frequency of the rotary drive (6) and of the positioning drive (8) and/or the reference drive frequency of the rotary drive (6) and of the positioning drive (8) comprises the electric current intensity and/or the electric power of the rotary drive (6) and of the positioning drive (8).

5. Method according to at least one of the preceding claims, **characterized by** filtering the detected actual drive frequency of the rotary drive (6) and the positioning drive (8) and/or storing the detected actual drive frequency of the rotary drive (6) and the positioning drive (8) in the storage means (14).

6. Method according to at least one of the preceding claims, **characterized in that** the storage means (14) of the control unit (16) comprises a distributed computing structure.

7. A method according to at least one of the preceding claims, **characterized in that** providing the reference drive frequency of the rotary drive (6) and the positioning drive (8) comprises storing at least one algorithm for calculating the reference drive frequency of the rotary drive (6) and the positioning drive (8) and calculating the reference drive frequency of the rotary drive (6) and the positioning drive (8).

8. Method according to at least one of the preceding claims, **characterized in that** the machining of the workpiece (12) comprises an approach and extension phase as well as a working phase of the tool (12), and **in that** a reference drive frequency of the rotary drive (6) and of the positioning drive (8) can be assigned or is assigned to the approach and extension phase as well as to the working phase in each case.

9. Method according to at least one of the preceding claims, **characterized by** measuring and/or analyzing the tool (12) with a testing means for determining the actual tool state of the tool (12) and validating and/or adapting the reference tool state by assigning the actual drive frequency of the rotary drive (6) and the positioning drive (8) at the detected actual tool state as a new reference drive frequency of the rotary drive (6) and the positioning drive (8).

10. Machine tool (2) comprising means for operating the method according to one of claims 1 to 9, having at least one tool holder (4), having at least one electric rotary drive (6) which can drive the tool holder (4), having at least one electric positioning drive (8) by means of which a distance and/or an angle at least between workpiece (10) and tool mount (4) can be set, having at least one tool (12) which is arranged in a rotationally fixed manner in the tool mount (4), and having at least one control unit (16) comprising a storage means (14).).

## Revendications

1. Procédé permettant de collecter au moins un état d'un outil (12) d'une machine-outil (2) d'usinage de pièces (10), cette machine-outil comprenant au moins un porte-outil (4), au moins un entraînement rotatif électrique (6) pouvant être entraîné par le porte-outil (4), au moins un entraînement électrique de positionnement (8), au moyen duquel un écart et/ou un angle peut être réglé au moins entre la pièce (10) et le porte-outil (4), au moins un outil (12) placé de manière non rotative dans le porte-outil (4) et au moins une unité de commande (16) renfermant un moyen de mémorisation (14), procédé se déroulant selon les étapes suivantes :
a. Collecte ou mise à disposition de données d'outils et de pièces dans le moyen de mémorisation (14) de l'unité de commande (16) ;
b. Mise à disposition d'au moins une fréquence d'entraînement de référence de l'entraînement rotatif (6) et de l'entraînement de positionnement (8), à laquelle un état d'outil de référence de l'outil (12) est affecté au moins en fonction des données d'outil et de pièce, en consignant dans une base de données la fréquence d'entraînement de référence de l'entraînement rotatif (6) et de l'entraînement de positionnement (8) dans le moyen de mémorisation (14) de l'unité de commande (16) ;
c. Collecte d'au moins une fréquence d'entraînement RÉELLE de l'entraînement rotatif (6) et de l'entraînement de positionnement (8) ;
d. Affectation de la fréquence d'entraînement RÉELLE de l'entraînement rotatif (6) et de l'entraînement de positionnement (8) à une fréquence d'entraînement de référence de l'entraînement rotatif (6) et de l'entraînement de positionnement (8) par l'unité de commande (16) et affectation de l'état d'outil de référence de l'outil (12) par évaluation et/ou interprétation d'au moins la fréquence d'entraînement de référence de l'entraînement rotatif (6) et de l'entraînement de positionnement (8) affectée à la fréquence d'entraînement RÉELLE de l'entraînement rotatif (6) et de l'entraînement de positionnement (8) par l'unité de commande (16) ;
e. Émission d'un signal d'affichage grâce auquel l'état d'outil de référence est affiché et émission d'un signal de notification lorsque la fréquence d'entraînement de référence de l'entraînement rotatif (6) et de l'entraînement de positionnement (8) affectée à la fréquence d'entraînement RÉELLE de l'entraînement rotatif (6) et de l'entraînement de positionnement (8) a atteint ou dépassé un critère de notification.

2. Procédé selon la revendication 1, **caractérisé par** l'affichage du signal d'affichage et/ou du signal de notification sur un moyen d'affichage de la machine-outil (2), disposé directement ou indirectement sur la machine-outil (2) et/ou affecté fonctionnellement à la machine-outil (2) et/ou par la transmission et l'affichage du signal d'affichage et/ou du signal de position à/sur un moyen d'affichage externe indépendant de la machine-outil (2).

3. Procédé selon la revendication 1 ou 2, **caractérisé en ce que** l'état d'outil de référence qui peut être affiché via le signal d'affichage comprend au moins des informations sur la durée de vie restante de l'outil (12) et/ou sur l'usure de l'outil (12) et/ou **en ce que** l'état d'outil de référence qui peut être affiché via le signal de notification comprend un éclatement de l'outil (12), une rupture de l'outil (12) et/ou une surcharge de l'outil (12).

4. Procédé selon au moins l'une des revendications précédentes, **caractérisé en ce que** la fréquence d'entraînement RÉELLE de l'entraînement rotatif (6) et de l'entraînement de positionnement (8) et/ou la fréquence d'entraînement de référence de l'entraînement rotatif (6) et de l'entraînement de positionnement (8) comprend l'intensité électrique et/ou la puissance électrique de l'entraînement rotatif (6) et de l'entraînement de positionnement (8).

5. Procédé selon au moins l'une des revendications précédentes, **caractérisé par** le filtrage de la fréquence d'entraînement RÉELLE collectée de l'entraînement rotatif (6) et de l'entraînement de positionnement (8) et/ou la mémorisation de la fréquence d'entraînement RÉELLE collectée de l'entraînement rotatif (6) et de l'entraînement de positionnement (8) dans le moyen de mémorisation (14).

6. Procédé selon au moins l'une des revendications précédentes, **caractérisé en ce que** le moyen de mémorisation (14) de l'unité de commande (16) comprend une structure d'ordinateur répartie.

7. Procédé selon au moins l'une des revendications précédentes, **caractérisé en ce que** la mise à disposition de la fréquence d'entraînement de référence de l'entraînement rotatif (6) et de l'entraînement de positionnement (8) comprend une consignation d'au moins un algorithme de calcul de la fréquence d'entraînement de référence de l'entraînement rotatif (6) et de l'entraînement de positionnement (8) et un calcul de la fréquence d'entraînement de référence de l'entraînement rotatif (6) et de l'entraînement de positionnement (8).

8. Procédé selon au moins l'une des revendications précédentes, **caractérisé en ce que** l'usinage de la pièce (12) comprend une phase initiale et de sortie ainsi qu'une phase d'usinage de l'outil (12) et **en ce que** la phase initiale et de sortie et la phase d'usinage peuvent chacune avoir ou ont chacune une fréquence d'entraînement de référence de l'entraînement rotatif. (6) et l'entraînement de positionnement (8) qui leur est affectée.

9. Procédé selon au moins l'une des revendications précédentes, **caractérisé par** la mesure et/ou l'analyse de l'outil (12) à l'aide d'un moyen de test pour déterminer l'état RÉEL de l'outil (12) et valider et/ou adapter l'état d'outil de référence en affectant la fréquence d'entraînement RÉELLE de l'entraînement rotatif (6) et de l'entraînement de positionnement (8) lorsque l'état d'outil RÉEL est collecté comme nouvelle fréquence d'entraînement de référence de l'entraînement rotatif (6) et de l'entraînement de positionnement (8).

10. Machine-outil (2) comprenant un moyen permettant d'exécuter le procédé selon l'une des revendications 1 à 9, avec au moins un porte-outil (4), avec au moins un entraînement rotatif électrique (6) pouvant être entraîné par le porte-outil (4), avec au moins un entraînement électrique de positionnement (8), au moyen duquel un écart et/ou un angle peut être réglé au moins entre la pièce (10) et le porte-outil (4), avec au moins un outil (12) placé de manière non rotative dans le porte-outil (4) et avec au moins une unité de commande (16) renfermant un moyen de mémorisation (14).
